# EUROPÄISCHE PATENTSCHRIFT

(11) **EP 0 493 552 B1**
(45) Veröffentlichungstag und Bekanntmachung des Hinweises auf die Patenterteilung: **21.02.1996**
(21) Anmeldenummer: 91912378.6
(22) Anmeldetag: 22.07.1991
(51) Int. Cl.: E06B 3/26, E06B 3/30

(54) **STATISCH STABILE, THERMISCH VOLLSTÄNDIG GEBROCHENE RAHMENKONSTRUKTION FÜR FENSTER UND FASSADENELEMENTE**
STATICALLY STABLE FRAME WITH FULL THERMAL BREAK FOR WINDOWS AND CLADDING PANELS
CADRE STATIQUEMENT STABLE, SANS PONT THERMIQUE, POUR FENETRES ET ELEMENTS DE FACADES

(30) Priorität: 20.07.1990 CH 2425/90
(43) Veröffentlichungstag der Anmeldung: 08.07.1992
(73) Patentinhaber: HÄRING & CO. AG, CH-4133 Pratteln (CH)
(72) Erfinder: ROTH, Fritz, CH-4414 Füllinsdorf (CH); HÄRING, Christoph, CH-4414 Füllinsdorf (CH)
(74) Vertreter: White, William
(86) Internationale Anmeldenummer: CH9100152
(87) Internationale Veröffentlichungsnummer: WO9201853

(56) Entgegenhaltungen:
- EP-A- 0 143 745
- EP-A- 0 304 829
- AT-B- 387 259
- DE-A- 1 659 975
- DE-A- 1 905 846
- DE-A- 2 336 308
- DE-A- 3 203 253

## Beschreibung

Die vorliegende Erfindung betrifft eine Rahmenkonstruktion für Fenster und Fassadenelemente, mit einem Innenrahmen und einem Aussenrahmen, welche beiden Rahmen je als ein Sandwichelement ausgebildet sind.

Rahmenkonstruktionen für Fenster und für die Fixation von Fassadenelementen am Bau sind seit langem bekannt, wie beispielsweise die DE-A-1659975 zeigt. So sind Innenrahmen und Aussenrahmen in Sandwichbauweise erstellt worden, wenn es sich darum handelte, die Sichtflächen und nur diese aus einem Edelholz zu fertigen, weil die Herstellung ganzer einstückiger Fensterrahmen und -Flügel aus Edelhölzern teuer zu stehen kam. Um Feuchtigkeit oder Kondenswasser fortzuleiten wurden im Rahmen senkrecht aufeinanderstehende Bohrungen vorgesehen. Nach moderner Ansicht sind aber solche Konstruktionen zu wenig gut gegen Wärmeverlust isoliert.

Der heutigen Forderung nach hohen Isolationswerten, d.h. niederen K-Werten, und Vermeidung von Kältebrücken, nämlich thermisch gebrochene Konstruktionen, wird von der Bauseite her grosser Beachtung geschenkt. Bei mehrfachbeglasten Fenstern ist es möglich einen K-Wert von 0.8 zu erreichen.

Im Zuge der Zeit wurden Rahmen mehrheitlich aus Kunststoff oder Leichtmetall gefertigt. Ein Beispiel dafür findet sich in der EP-A-0143745. Die aussenliegenden Profile, wie Aussenprofil und Blendrahmen sind mit sogenannten Isolierstäbe mit den innenliegenden Profilen, wie Innenprofil und Anschlagprofil verbunden. Auch das Halteprofil zur Befestigung des Glases ist mit einer Rastverbindung am Anschlagprofil befestigt. Somit sind die einzelnen Profile untereinander mittels Rastverbindungen verbunden, was vor allem im Fall des Halteprofils beim Wechseln des Glases zu Beschädigungen der Rastelemente führen kann. Die Temperatureinflüsse können eine schädliche Beeinflussung der Rasthalterungen zwischen den Metallprofilen und den Isolierstäben haben, so dass es denkbar sein könnte, dass sich die inneren und die äusseren Ramenteile voneinander lösen.

Es ist demgemäss eine Aufgabe der Erfindung eine Rahmenkonstruktion für Fenster und Fassadenelemente zu schaffen, bei der die genannten Nachteile vermieden sind und die thermisch gebrochen ist und einen K-Wert von ca. 0,8 ermöglicht.

Erfindungsgemäss wird dies mit einer Rahmenkonstruktion erreicht, die dadurch gekennzeichnet ist, dass zwischen dem Innenrahmen und dem Aussenrahmen jederzeit ein offener Falz vorhanden ist und der Innenrahmen ein mechanisch festes rundum laufendes inneres Innenrahmensichtteil auf das ein erstes rundum laufendes Isolationselement und ein mechanisch festes rundum laufendes Innenrahmenquerteil aufgesetzt sind und das Isolationselement mit einem rundum laufenden Innenrahmentragteil verbunden ist, mit dem ein äusseres Innenrahmenabschlussteil mechanisch fest verbunden ist, dass zwischen dem inneren Innenrahmensichtteil resp. dem äußeren Innenrahmenabschlussteil das Fensterglas oder das Fassadenelement gegen das erste Isolationselement und das Innenrahmentragteil abstützbar ist und zwischen dem inneren Innenrahmenteil resp. dem Innenrahmenabschlussteil und dem Fensterglas oder dem Fassadenelement einerseits und dem ersten Isolationselement und Innenrahmentragteil anderseits erste und zweite rundum laufende Lippendichtungen vorhanden sind, dass ferner der Aussenrahmen ein mechanisch festes rundum laufendes inneres Aussenrahmensichtteil aufweist, auf das gegen aussen ein erstes rundum laufendes zweites Isolationselement aufgesetzt ist, das ein äusseres rundum laufendes Aussenrahmentragteil trägt, mit dem ein Aussenrahmenabschlussteil mechanisch fest verbunden ist, dass der innere Innenrahmensichtteil, der Innenrahmenquerteil, der Innenrahmentragteil sowie der innere Aussenrahmensichtteil und der äussere Aussenrahmentragteil aus Holz bestehen, und dass die Isolationselemente als Sandwichelemente mit mechanisch festen äusseren Platten und einem Hartschaumkern ausgebildet sind.

Im Folgenden wird eine vorteilhafte Ausführungsvariante einer erfindungsgemässen Rahmenkonstruktion am Beispiel eines Fensterrahmens anhand der Zeichnung beschrieben. In letzerer zeigt
Fig. 1 einen vertikalen Schnitt durch ein perspektivisch dargestelltes Fenster mit erfindungsgemässer Rahmenkonstruktion, im Bereich des unteren vertikalen Rahmenteiles,
Fig. 2 im Detail die einzelnen Elemente des Rahmens anhand eines Vertikalschnittes durch den unteren vertikalen Rahmenteil,
Fig. 3 ein entsprechender Vertikalschnitt durch einen Teil der Rahmenkonstruktion am Ort des das Glas abstützenden Verglasungsklotzes, und
Fig. 4 einen Horizontalschnitt durch die Rahmenkonstruktion im Bereich eines seiner Vertikalteile.

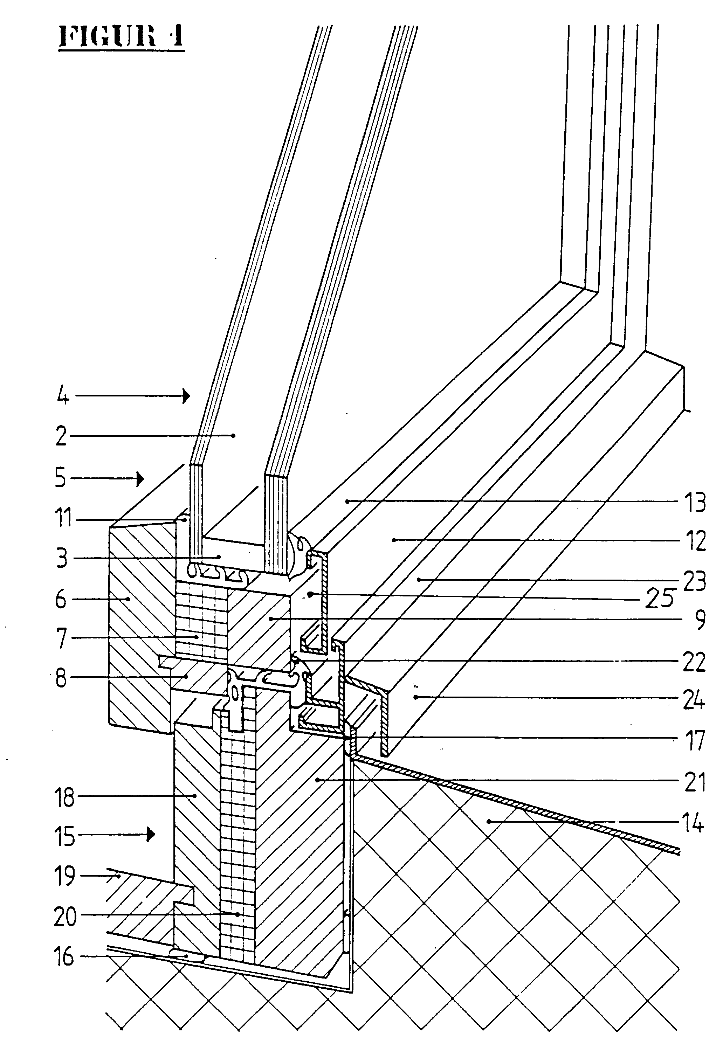

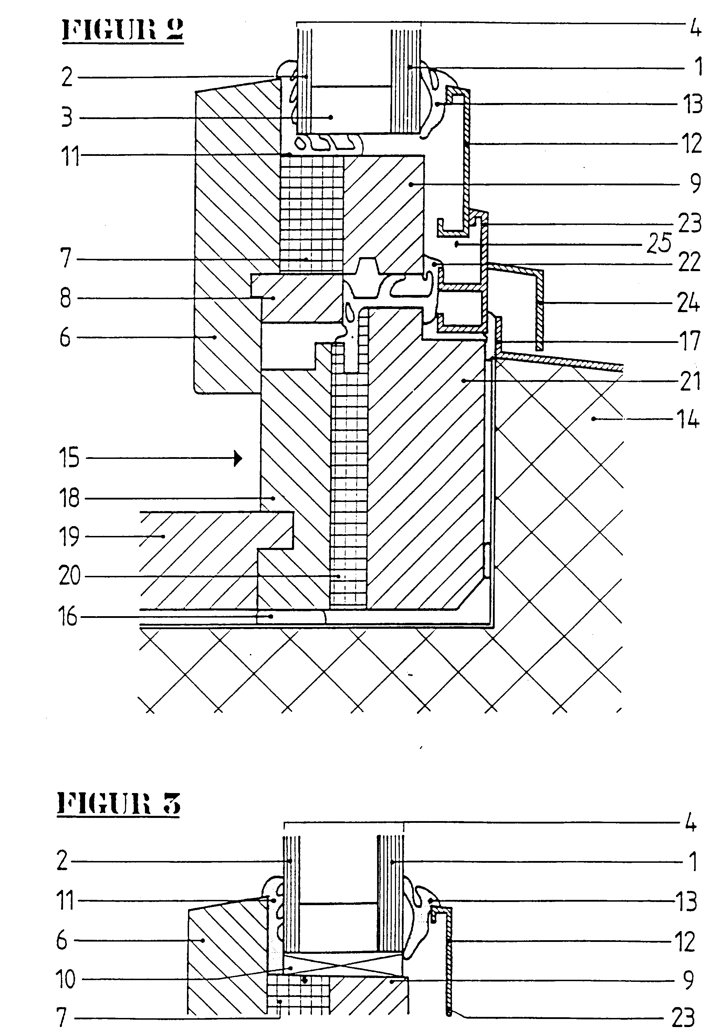

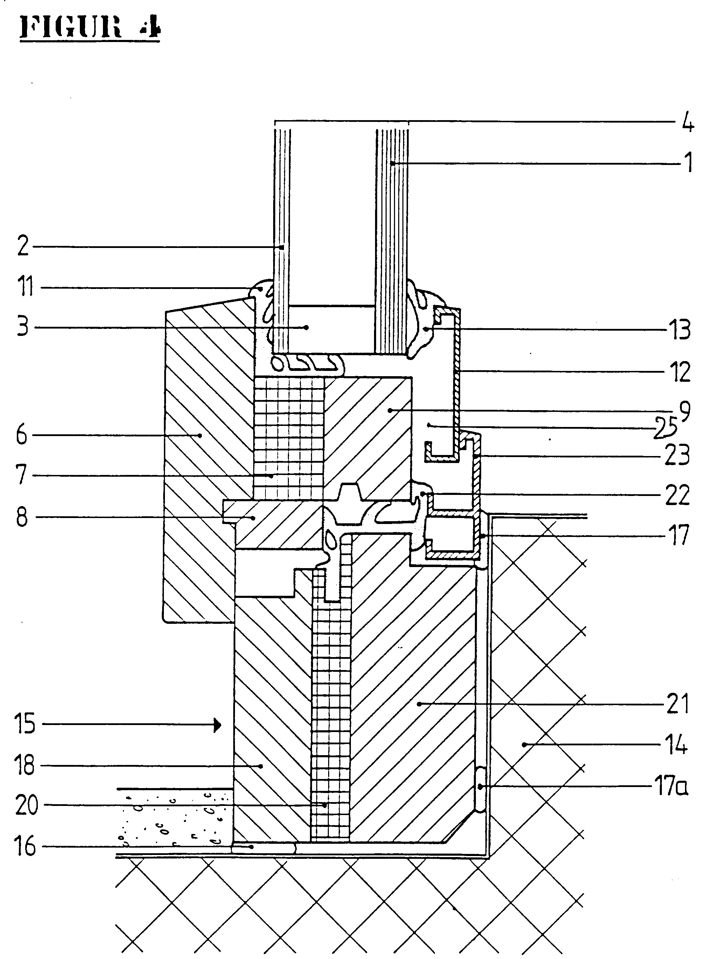

In den Fig. 1, 2 und 4 erkennt man ein Doppelglasfenster mit äusserer Scheibe 1 und innerer, üblicherweise etwas dünnerer Scheibe 2, die vorteilhafterweise in bekannter Art mittels Randstegen 3 zu einer Doppelscheibe 4 zusammengefügt sind und zweiseitig einen vorteilhafterweise evakuierten oder mit Edelgas oder getrockneter Luft gefüllten Hohlraum begrenzen. Diese Doppelscheibe 4 ist, wie bei Fenstern üblich, in einen vorteilhafterweise zumindest um eine senkrechte Achse schwenkbaren Innenrahmen 5 eingesetzt, der aus Holz besteht und ein inneres, rundum laufendes Innenrahmensichtteil 6 aufweist, mit welchem ein ebenfalls rundum laufendes erstes Isolationselement 7 verbunden ist. Letzteres stützt sich auf ein mechanisch fest mit dem inneren Rahmenteil 6 verbundenes Innenrahmenquerteil 8 ab und trägt ein äusseres Innenrahmentragteil 9, das ebenfalls aus Holz besteht. Beim ersten Isolationselement 7 handelt es sich um ein Sandwichelement mit mechanisch festen äusseren Platten und einem Hartschaumkern, das in begrenztem Rahmen Kräfte, auch Scherkräfte, aufnehmen, resp. übertragen kann.

Wie sich aus Fig. 3 entnehmen lässt, wird die Doppelscheibe 4 in bekannter Art und Weise im Bereich der aus der Zeichnung nicht ersichtlichen senkrecht stehenden Schwenkachse des Fensterflügels mittels eines Verglasungsklotzes 10 auf das erste Isolationselement 7 und das äussere Innenrahmentragteil 9 abgestützt. Zwischen dem inneren Innenrahmensichtteil 6 und der Doppelscheibe 4 sowie zwischen dem ersten Isolationselement 7 und dem äusseren Innenrahmentragteil 9 und der Doppelscheibe 4 befindet sich eine erste Lippendichtung 11, die sich im Bereich der Stirnseite der Doppelscheibe 4 vorteilhafterweise nicht über die ganze Scheibendicke erstreckt, derart, dass in diesen Bereich eventuell auftretendes Kondensationswasser sich nicht im einem gefangenen Raum befindet und abfliessen und/oder wieder verdunsten kann.

Wie sich aus den Fig. 1 bis 4 ergibt, ist auf der Aussenseite der äusseren Scheibe 1 ein rundum laufendes Abschlussteil 12 vorgesehen, das über nicht dargestellte Tragelemente mit dem äusseren Innenrahmentragteil 9 verbunden und über eine zweite Lippendichtung 13 gegen die Scheibe 1 abgestützt ist und den Innenrahmen 5, der hier als Fensterflügel ausgebildet ist, gegen aussen abschliesst. Dieses Innenrahmen Abschlussteil 12 kann vorteilhafterweise aus einem Aluminiumprofil bestehen. Zwischen ihm, den beiden Lippendichtungen 11 und 13, der Doppelscheibe 4 und dem äusseren Innenrahmentragteil 9 befindet sich ein Hohlraum 25, der auch bei geschlossenem Fensterflügel umlüftet ist, da zwischen dem Innenrahmen-Abschlussteil 12 und dem äusseren Innenrahmentragteil 9 dauernd eine Öffnung bestehen bleibt.

Wie üblich vorteilhafterweise über Dichtungen 16, 17 und 17a ist ein Aussenrahmen 15 auf ein Mauerwerk 14 oder ähnliches Konstruktionsteil eines Hauses abgestützt. Er umfasst ein rundum laufendes inneres Aussenrahmensichtteil 18, das auf seiner horizontalen unteren Innenseite mit einem Fensterbrett 19 verbunden sein kann und an das aussen ein zweites rundum laufendes Isolationselement 20 anschliesst und das ein rundum laufendes äusseres Aussenrahmentragteil 21 trägt.

Mit dem zweiten Isolationselement 20 und dem äusseren Aussenrahmentragteil 21 ist vorteilhafterweise eine dritte rundum laufende Lippendichtung 22 verbunden, die einerseits dem Innenrahmenquerteil 8 beim Schliessen des Fensters als weicher Anschlag gegen den Aussenrahmen 15 dient und andererseits den zwischen dem Innenrahmen 5 und dem Aussenrahmen 15 befindlichen Falz 25 mehrfach abdichtet. Aussen ist diese dritte Lippendichtung 22 durch ein rundum laufendes Aussenrahmenabschlussteil 23, vorteilhafterweise in Form eines Aluminiumprofils, abgedeckt, das in seinem unteren horizontalen Teil mit einem als Regennase wirkendes Abdeckprofil 24 verbunden sein kann, das verhindert, dass Meteorwasser zwischen Aussenrahmen 15 und Mauerwerk 14 eindringen kann. Das Aussenrahmenabschlussteil 23 ist mittels nicht dargestellten Tragelementen mit dem äusseren Aussenrahmentragteil 21 verbunden.

Der Fachmann erkennt, dass sowohl der Innen- als auch der Aussenrahmen 5, resp. 15 aus statisch stabilen Konstruktionselementen besteht, die in Richtung von aussen nach innen thermisch vollständig gebrochen sind und keinerlei Kältebrücken aufweisen. Die beschriebene Rahmenkonstruktion erfüllt demnach die der vorliegenden Erfindung zugrunde gelegte Aufgabe optimal. Da die diversen Rahmenteile 5, 8, 9, 18 und 21 aus Holz gefertigt sind und für die Isolationselemente 7 und 20 Hartschaumplatten verwendet werden, kann ohne übermässige Dicke der Rahmenkonstruktion erfindungsgemäss ein Fensterrahmen realisiert werden, der einen K-Wert von 0,8 oder darunter aufweist und demnach den Isolationswert einer Doppelscheibe aufweist. Die Verwendung von Holz als wesentliches Konstruktionsmaterial für die erfindungsgemässe Rahmenkonstruktion weist gegenüber Kunststoff oder Metall auch Vorteile in puncto Festigkeit und Berührungskomfort auf.

Obwohl die erfindungsgemässe Rahmenkonstruktion hiervor anhand eines Fensters beschrieben und illustriert worden ist erkennt der Fachmann leicht, dass sie, möglicherweise auf einen einzelnen den konkreten Gegebenheiten konstruktiv angepassten Rahmen, ähnlich dem hiervor beschriebenen Innenrahmen, reduziert, auch für die Fixation von Fassadenteilen an Gebäuden verwendet werden kann.

## Patentansprüche

1. Rahmenkonstruktion für Fenster und Fassadenelemente, mit einem Innenrahmen (5) und einem Aussenrahmen (15), welche beiden Rahmen je als Sandwichelemente ausgebildet sind, **dadurch gekennzeichnet**, dass zwischen dem Innenrahmen (5) und dem Aussenrahmen (15) jederzeit ein offener Falz (25) vorhanden ist und der Innenrahmen (5) ein mechanisch festes rundum laufendes inneres Innenrahmensichtteil (6) auf das ein erstes rundum laufendes Isolationselement (7) und ein mechanisch festes rundum laufendes Innenrahmenquerteil (8) aufgesetzt sind und das Isolationselement (7) mit einem rundum laufenden Innenrahmentragteil (9) verbunden ist, mit dem ein äusseres Innenrahmenabschlussteil (12) mechanisch fest verbunden ist, dass zwischen dem inneren Innenrahmensichtteil (6) resp. dem äußeren Innenrahmenabschlussteil (12) das Fensterglas oder das Fassadenelement (4) gegen das erste Isolationselement (7) und das Innenrahmentragteil (9) abstützbar ist und zwischen dem inneren Innenrahmenteil (6) resp. dem Innenrahmenabschlussteil (12) und dem Fensterglas oder dem Fassadenelement (4) einerseits und dem ersten Isolationselement (7) und Innenrahmentragteil (9) anderseits erste und zweite rundum laufende Lippendichtungen (11,13) vorhanden sind, dass ferner der Aussenrahmen (15) ein mechanisch festes rundum laufendes inneres Aussenrahmensichtteil (18) aufweist, auf das gegen aussen ein erstes rundum laufendes zweites Isolationselement (20) aufgesetzt ist, das ein äusseres rundum laufendes Aussenrahmentragteil (21) trägt, mit dem ein Aussenrahmenabschlussteil (23) mechanisch fest verbunden ist, dass der innere Innenrahmensichtteil (6), der Innenrahmenquerteil (8), der Innenrahmentragteil (9) sowie der innere Aussenrahmensichtteil (18) und der äussere Aussenrahmentragteil (21) aus Holz bestehen, und dass die Isolationselemente (7, 20) als Sandwichelemente mit mechanisch festen äusseren Platten und einem Hartschaumkern ausgebildet sind.

2. Rahmenkonstruktion nach Anspruch 1, **dadurch gekennzeichnet**, dass das Innenrahmen-Abschlussteil (12) und/oder das Aussenrahmen-Abschlussteil (23) aus Profilen aus Aluminium oder sonstigen nichtrostenden Metallen bestehen.

3. Rahmenkonstruktion nach einem der Ansprüche 1 oder 2, **dadurch gekennzeichnet**, dass sich die äussere Lippendichtung (11), zwischen Doppelglasscheibe (4) und dem Innenrahmensichtteil (6) vollständig über das Isolationselement (7) und zumindest teilweise über das Innenrahmentragteil (9) erstreckt.

## Claims

1. Frame structure for windows and facade elements, having an inner frame (5) and an outer frame (15), the two frames each being designed as sandwich elements, characterized in that an open rebate (25) is present at all times between the inner frame (5) and the outer frame (15), and the inner frame (5) has a mechanically stable encircling interior inner-frame visible part (6) on which a first encircling insulation element (7) and a mechanically stable encircling inner-frame transverse part (8) are seated, and the insulation element (7) is connected to an encircling inner-frame bearing part (9) to which an exterior inner-frame termination part (12) is connected in a mechanically stable manner, in that, between the interior inner-frame visible part (6) and the exterior inner-frame termination part (12), the window glazing or the facade element (4) can be supported with respect to the first insulation element (7) and the inner-frame bearing part (9) and, between the interior inner-frame visible part (6) and the inner-frame termination part (12) and the window glazing or the facade element (4), on the one hand, and the first insulation element (7) and inner-frame bearing part (9) on the other hand, first and second encircling lip seals (11, 13) are present, in that, furthermore, the outer frame (15) exhibits a mechanically stable encircling interior outer-frame visible part (18) on which a second encircling insulation element (20) is seated towards the outside, which insulation element (20) bears an exterior encircling outer-frame bearing part (21) to which an outer-frame termination part (23) is connected in a mechanically stable manner, in that the interior inner-frame visible part (6), the inner-frame transverse part (8), the inner-frame bearing part (9) and the interior outer-frame visible part (18) and the exterior outer-frame bearing part (21) consist of wood, and in that the insulation elements (7, 20) are designed as sandwich elements with mechanically stable exterior panels and a rigid-foam core.

2. Frame structure according to Claim 1, characterized in that the inner-frame termination part (12) and/or the outer-frame termination part (23) comprise profiles made of aluminium or other rust-resistant metals.

3. Frame structure according to one of Claims 1 or 2, characterized in that the exterior lip seal (11) between double-glazing unit (4) and the inner-frame visible part (6), extends fully over the insulation element (7) and at least partially over the inner-frame bearing part (9).

## Revendications

1. Construction de châssis pour fenêtre et éléments de façade, comprenant un châssis intérieur (5) et un châssis extérieur (15), les deux châssis étant réalisés sous la forme d'éléments sandwiches, caractérisé en ce qu'entre le châssis intérieur (5) et le châssis extérieur (15) il existe toujours une feuillure (25) ouverte et le châssis intérieur (5) comporte une pièce apparente (6), intérieure, périphérique, mécanique, fixe, sur laquelle sont rapportés un premier élément d'isolation (7) continu, périphérique, et une pièce transversale (8), périphérique du châssis intérieur, continue, mécanique, fixe, et l'élément d'isolation (7) est relié à une pièce de support (9) continue, périphérique, de châssis intérieur, à laquelle est solidarisée mécaniquement une pièce de recouvrement extérieure (12) pour le châssis intérieur, et en ce qu'entre la pièce apparente intérieure (6) et la pièce de couverture extérieure (12) se trouve la vitre ou l'élément de façade (4), s'appuyant contre le premier élément d'isolation (7) et la partie de châssis intérieur (9), et en ce que, d'une part, entre la partie intérieure (6) de châssis ou la pièce de couverture (12) du châssis intérieur et la vitre ou l'élément de façade (4), et d'autre part, l'élément isolant (7) et la pièce de support (9) il y a un premier et un second joint à lèvre, continus, périphériques (11, 13), et en ce qu'en outre le châssis extérieur (15) comporte une partie apparente intérieure (18), continue, périphérique, mécanique, fixe pour le châssis extérieur, pièce sur laquelle est rapporté un second élément d'isolation (20) continu, périphérique, situé à l'extérieur, qui porte une pièce de support de châssis (21) continue, périphérique extérieure, à laquelle est reliée solidairement, mécaniquement, une pièce de finition (23) de châssis extérieur, et la pièce apparente (6) du châssis intérieur, la pièce transversale (8), la pièce de support (9) du châssis intérieur ainsi que la pièce apparente intérieure (18) du châssis extérieur et la pièce de support extérieure (21) du châssis extérieur sont en bois et les éléments isolants (7, 20) sont des éléments sandwiches avec des plaques extérieures mécaniquement fixes et un noyau en mousse dure.

2. Construction de châssis selon la revendication 1, caractérisée en ce que la pièce de finition (12) du châssis intérieur et/ou la pièce de finition (23) du châssis extérieur sont des profilés en aluminium ou autres métaux inoxydables.

3. Construction de châssis selon l'une des revendications 1 ou 2, caractérisée en ce que le joint à lèvre (11), extérieur, se trouve entre le vitrage à double vitre (4) et la pièce apparente (6) du châssis intérieur, en recouvrant complètement l'élément d'isolation (7) et s'étend au moins partiellement sur la partie de support (9) du châssis intérieur.
